# EUROPEAN PATENT SPECIFICATION

(11) **EP 2 398 195 B1**
(45) Date of publication and mention of the grant of the patent: **22.08.2012**
(21) Application number: 10305657.8
(22) Date of filing: 18.06.2010
(51) Int. Cl.: H04L 12/56

(54) **Method and apparatus for policing and buffering a bursty data signal**
Verfahren und Vorrichtung zur Kontrolle und Pufferung eines Burst-Datensignals
Procédé et appareil pour contrôler et mettre en mémoire tampon un signal de données par paquets

(43) Date of publication of application: 21.12.2011
(73) Proprietor: Alcatel Lucent, 75007 Paris (FR)
(72) Inventor: Shirizly, Dekel, 37020, Pardes Hana (IL)
(74) Representative: Urlichs, Stefan

(56) References cited:
- EP-A1- 1 653 685
- EP-A1- 2 040 420
- DE-C1- 4 432 061
- US-A1- 2005 078 602
- US-A1- 2006 098 672
- US-A1- 2010 061 260
- US-B1- 7 590 054

## Description

### Field of the Invention

The present invention relates to the field of telecommunications and more particularly to a method and related apparatus for policing and buffering a bursty data signal.

### Background of the Invention

When multiple data sources feed to a limited bandwidth network connection, data streams of these sources need to be policed. The data rate, at which data from a particular source will be transmitted through a provider network, is typically defined in a Service Level Agreement (SLA). An SLA may define for example a Committed Information Rate (CIR), i.e. an average bandwidth guaranteed by the network provider to work under normal conditions. At any given time, the bandwidth should not fall below the CIR.

Above the CIR, an allowance of burstable bandwidth is often given, known as the Excess Information Rate (EIR) or Peak Information Rate (PIR). In the SLA, a network provider may guarantee that the connection will always support the CIR rate, and sometimes also the EIR rate, provided that there is adequate bandwidth.

According to EP1653685A1, it is known to store EIR packets and CIR packets in queues of different priority and to drop EIR packets from the lower priority queue in case of congestions. This has the disadvantage that it could lead to mis-ordered packets, which would not work for an Ethernet network.

According to EP1653685A1, it is further known to store all packets in a single queue after marking each packet as CIR or EIR and to drop packets marked as EIR from the queue in case of congestions. This has the drawback that FIFO buffers cannot be used and the queue control is not simple to implement.

Similarly, US2006/009872A1 discloses that CIR and EIR traffic shall be stored in a single queue to avoid misordering between packets and that EIR packets will be marked as discard eligible while CIR traffic will be marked as non-discard eligible.

### Summary of the Invention

At the entrance point of the provider network, data traffic will be classified as CIR, i.e. traffic within the guaranteed limit, or EIR traffic, i.e. traffic that exceeds the CIR limit but is still within the "best-effort" EIR bandwidth and will be transported if bandwidth is available but can be dropped otherwise. This process of classifying traffic and discarding data to enforce a certain data rate is also known as traffic policing (or just policing).

Usually, a data stream is buffered at the entrance point. Buffering will include CIR and EIR traffic. When the buffer approaches an upper limit, from this point on, only CIR traffic will be allowed to enter the buffer while EIR traffic will be discarded.

Since the decision of discarding traffic is done before the packet is buffered, once the decision to buffer the packet is taken and the packet is buffered, it will stay in the buffer even if it is EIR traffic and the buffer becomes congested. New CIR traffic then cannot enter the buffer because it is congested by traffic that could be EIR traffic.

A known solution to this is referred to as Random Early Drop (RED). Once the buffer occupancy reaches a certain threshold, newly arriving EIR traffic is being discarded randomly even if the buffer is not full.

It is an object of the present invention to provide an improved method and related apparatus for policing and buffering of bursty data streams.

These and other objects that appear below are achieved by a method and related apparatus for buffering a burst mode data signal containing formatted data units. In a traffic manager a policer classifies the data units into data units below a committed information rate and data units above the committed information rate. Policed data units will then be stored in a buffer memory. A buffer control monitors the filling level of the buffer memory and upon the buffer memory approaching to become full and one or more new data units below the committed information rate are received, discards data units above the committed information rate from the buffer memory to free memory space for storing the new data units below the committed information rate.

, The buffer memory is structured into at two queues, a first queue for data units below the committed information rate and a second queue for data units above the committed information rate. Packets are numbered with ascending sequence numbers and are read from the buffer memory in the order they had been stored.

The buffer control advantageously adjusts the size of the queues dynamically in dependence of the amount of data units received.

For instance, empty memory space can by default be assigned to first queue and upon receipt of a new data unit above the committed information rate, the queues will be resized to enlarge the second queue by at least the length of the new data unit as long as the buffer memory is not full.

Conversely, in case the buffer memory is full and upon receipt of a new data unit below the committed information rate; one or more data units will be discarded from the second queue and the queues will be resized to enlarge the first queue by at least the length of the new data unit.

With this approach of storing networking data inside a buffer, buffer utilization can be increased. This allows to use smaller buffers, which reduces equipment costs, or to store more data. CIR and EIR management will also be improved significantly.

In a preferable implementation, assignment of memory space to said queues is managed through the use of a linked list of buffer locations.

### Brief Description of the Drawings

Preferred embodiments of the present invention will now be described with reference to the accompanying drawings in which
- figure 1: shows a traffic manager for queuing of CIR and EIR traffic;
- figures 2 to 5: show enqueuing of incoming data packets of both CIR and EIR traffic;
- figure 6 and 7: show discarding of EIR traffic from the queue in case of a traffic congestion.

### Detailed Description of the Invention

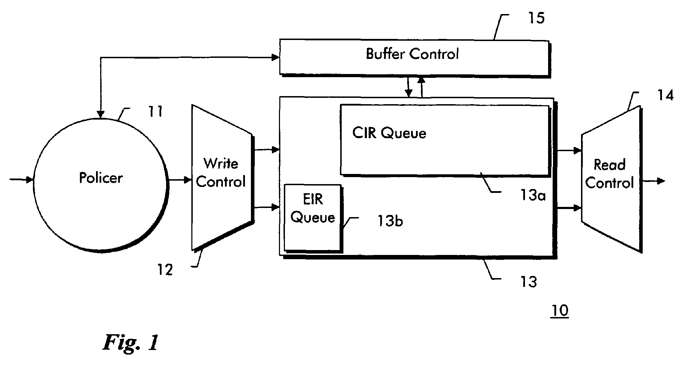

Figure 1 shows an embodiment of a traffic manager 10 for use in an edge node of a provider network. A policer 11 receives a data stream coming in from a customer node. The data stream is a bursty traffic signal that contains data packets of variable length. The policer has two configurable parameters, i.e. a Committed Information rate (CIR) and an Excess Information Rate (EIR). The policer determines for each data packet, whether it is within the CIR or above the CIR but within the EIR. The policer hence classifies each packet as either CIR or EIR traffic, or if the packet is above the EIR limit, discards it. The policing process as such is well known in the art.

CIR is the Committed Information Rate to the customer. EIR is the Excess Information Rate that is allowed for the customer. Above that, traffic is always discarded. On congestion, EIR is discarded. CIR traffic is assigned by provisioning (Connection Admission Control / CAC) and will not cause congestions.

It should be understood that CIR and EIR traffic can have the same Quality of Service (QoS) class. They are distinguished internally by a Drop Precedence bit that is assigned to the packet after policing.

The classification process is also referred to as coloring in the context of the present embodiment. In an illustrative way, one could think of green packets for CIR traffic, yellow packets for EIR traffic and red packets for traffic above the EIR. It should be understood that for EIR ↦ ∞, all traffic above the CIR can be colored as yellow EIR traffic.

The policed data packets are then written to a buffer memory 13 by a write control circuit 12. A read control circuit 14 can read the data packets from the buffer memory 13 and feed them to the network side link. Preferably, read control 14 reads the packets in the same order in which they had been received and stored into buffer 13. This is achieved in the embodiment through the use of ascending sequence numbers.

A buffer control circuit 15 controls the buffer. In particular, buffer control 15 monitors the filling level of buffer 13 and if buffer 13 becomes too full, informs the policer 11 of a congestion where EIR packets will be discarded and only CIR packets will be allowed to enter the memory 13.

According to the present embodiment, CIR and EIR traffic are stored in separate memory areas 13a, 13b inside buffer 13. This allows to discard EIR traffic from within buffer 13 once buffer 13 is full and further CIR traffic is received. Memory areas 13a and 13b will hereinafter be referred to as CIR queue and EIR queue, respectively. It should be clear that the memory areas of the two queues do not need to be contiguous areas in the buffer memory 13, but can be allocated to the queues for example through linked lists of memory locations.

A data packet entering the buffer is policed by policer 11 and colored as either CIR or EIR traffic. The packet is then buffered in the corresponding buffer area. A first buffer area 13a is dedicated to CIR traffic and second buffer area is dedicated to EIR traffic. Preferably, the allocation of CIR and EIR buffer areas is dynamic in accordance with the received traffic.

It is particularly advantageous and may for certain applications even be mandatory not to reorder the traffic. Therefore, the packets are numbered with sequence numbers and are extracted in the same order they had been stored.

If new traffic arrives and there is no more free space in the buffer anymore, and if this traffic is CIR traffic, the oldest EIR traffic in the buffer will be discarded by buffer control 15 in order to free up memory space to buffer the new CIR traffic.

If the buffer is full and new EIR traffic is received, it is optional but not mandatory to discard the oldest EIR traffic from the buffer in order to make room for new EIR traffic. This may be advantageous in certain applications, since EIR traffic that was buffered for too long may not be relevant anymore. It is also possible to simplify the solution by discarding all EIR traffic in the buffer if new CIR traffic is entering and the buffer is full.

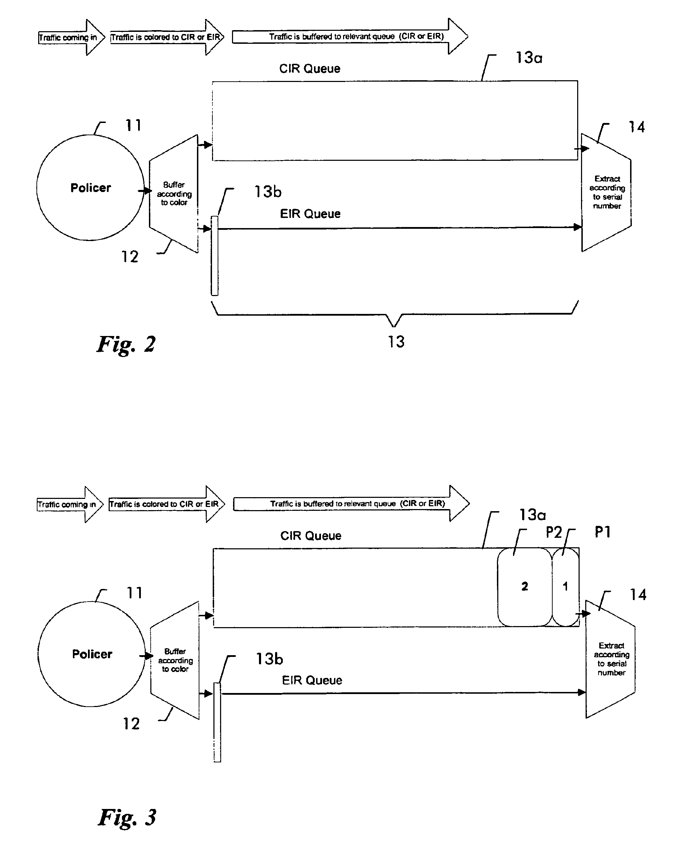

The principle of operation of the above traffic manager will now be described with reference to figures 2 to 7.

In figure 2, buffer 13 is completely empty. Therefore, all memory space of buffer 13 is devoted to CIR queue 13a.

In figure 2, two data packets P1 and P2 are received and colored by policer. Data packets P1 and P2 in this example are below the CIR and will hence be colored as CIR traffic ("green") and consequently stored in CIR queue 13a. Write control 12 assigns to data packets P1 and P2 sequence numbers 1 and 2, respectively.

In figure 3, a third data packet P3 is received, which exceeds the CIR and is hence colored as EIR traffic ("yellow"). Since buffer 13 is still quite empty, EIR traffic is accepted. Therefore, buffer control 15 resized the buffer areas 13a, 13b such that queue 13a devoted to CIR traffic is downsized and EIR queue 13b is enlarged by the length of data packet P3. Write control 12 assigns then as sequence number the value 3 to data packet P3 and stores it in EIR queue 13b.

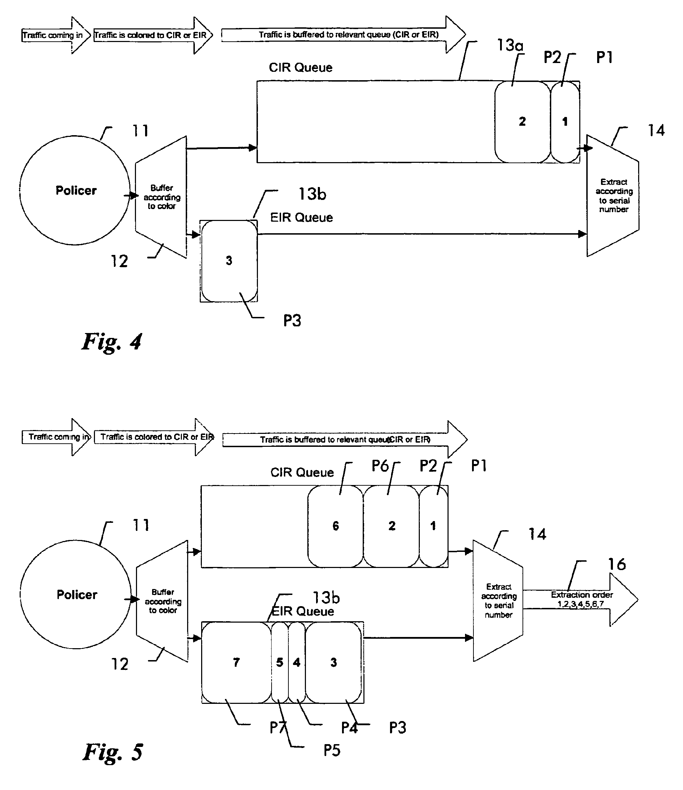

In figure 5, further data packets P4-P7 are received, of which P4, P5, and P7 are classified as EIR traffic, while P6 is classified as CIR traffic. Packets P4-P7 are assigned respective sequence numbers with values 4 to 7, respectively, and are stored in the appropriate queues (EIR or CIR queue) depending on their "color".

The order, in which data packets will be read from the memory through read control 14 is indicated as arrow 16, namely in the order of their sequence numbers from 1 to 7.

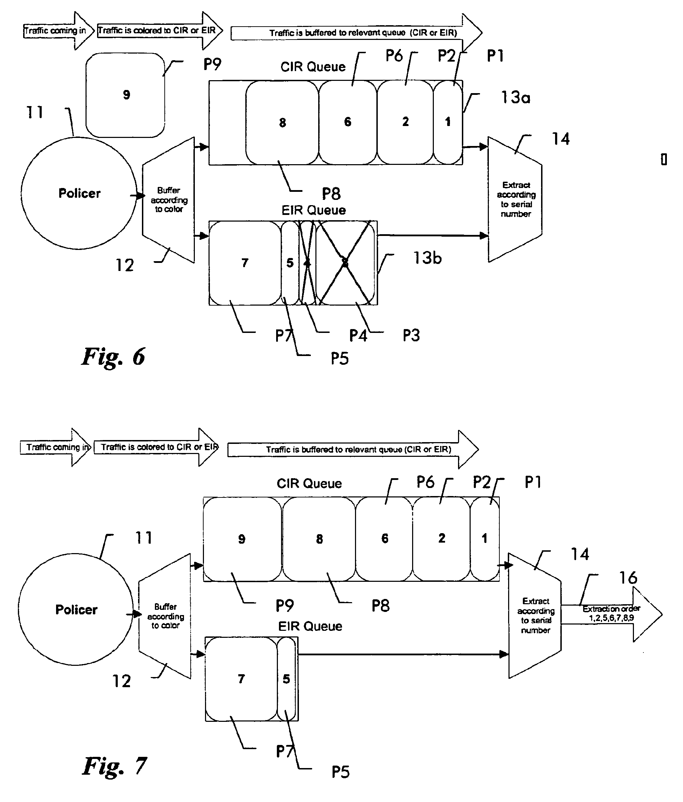

In figure 6, two new data packets P8 and P9 are received at policer 11. Data packet P8 is classified as CIR traffic and stored in CIR queue 13a. After storing packet P8, buffer 13 is nearly full. Data packet P9 is also classified as CIR traffic, but there is currently no free memory space anymore in CIR queue 13a.

As a consequence that the buffer limit is reached and CIR traffic is waiting to be queued, buffer control 15 (figure 1) discards data packets P3 and P4 from the EIR queue to free up storage.

In figure 7, it is shown that data packets P3 and P4 have been removed from the buffer and queues 13a and 13b resized, so that data packet P9 can be stored in CIR queue 13a. Arrow 16 indicates the order, in which read control 14 will now read the data packets from the buffer, namely in ascending order of the remaining sequence numbers 1, 2, 5, 6, 7, 8, and 9.

As described above incoming traffic is policed to EIR or CIR according to the flow classification and flow CIR bandwidth allocation. When the buffer is empty, all buffer allocation is assigned to CIR traffic. New CIR packets enters the buffer and are queued in the CIR queue. When a new EIR packet enters the buffer, as long as the buffer is not full, buffer space is allocated to the EIR queue and the EIR packet is queued. In other words, as long as the buffer occupancy is not high, packets are buffered in CIR and EIR queues. Packets are extracted according to their entering order by numbering the headers.

If a new CIR packet arrives and there is no room left in the CIR queue, one or more EIR packets are discarded from the head of the EIR queue and the buffer space is reallocated back to the CIR queue. The extraction order is hence changed according to discarded packets.

In order to allow RED (Random Early Drop) discarding for TCP reasons, a threshold at the total queue size (CIR+EIR) may specify that from this point on, an RED algorithm can start discarding EIR packets randomly. Total discarding of EIR traffic will begin only if the whole buffer is occupied by CIR traffic. This is different from present solutions where all EIR traffic is discarded even if the buffer is not completely full. This hence results in an improved buffer utilization.

To simplify the solution, buffer allocation can be managed in the form of a linked list instead of a FIFO based approach. Through this, one or more EIR packets can be discarded from the EIR queue in one operation and the emptied buffer is automatically assigned to the CIR queue.

Another option is to flush the EIR queue and discard all EIR packets from the buffer. This may result in discarding packets that might have been transmitted but is a very simple implementation.

The present invention can for instance be used for traffic management, in switches or packet processors. Any FPGA design implementing buffering or traffic management can for instance use this invention.

It should be understood that the present invention is applicable for any type of burst mode data signals that need policing. Burst mode signals contain formatted units of data, often referred to as packets, which typically have a header and a data portion. Communication protocols that may support the invention include but are not limited to the Internet Protocol (IP).

The description and drawings merely illustrate the principles of the invention. It will thus be appreciated that those skilled in the art will be able to devise various arrangements that, although not explicitly described or shown herein, embody the principles of the invention as claimed. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. The functions of the various elements shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method of buffering a burst mode data signal comprising formatted data units, the method comprising:
- policing a data stream to classify said data units into data units below a committed information rate and data units above said committed information rate;
- storing said policed data units into a buffer memory (13);
- upon the buffer memory (13) approaching to become full and one or more new data units below said committed information rate are received; discarding data units above said committed information rate from said buffer memory (13) and storing said new data units below said committed information rate into said buffer memory (13);
wherein said buffer memory (13) is structured into at least two queues (13a, 13b), and wherein data units below said committed information rate are stored in a first of said queues (13a) and data units above said committed information rate are stored in a second of said queues (136);
**characterized in that**
said data units are numbered with ascending sequence numbers before storing them into said buffer memory (13); and **in that**
said numbered data units are read from the buffer memory (13) in the order they had been stored based on said ascending sequence numbers.

2. A method according to claim 1, wherein the size of said queues (13a, 13b) is dynamically adjusted in dependence of the amount of data units received.

3. A method according to claim 2, wherein empty memory space is by default assigned to said first queue (13a) and wherein upon receipt of a new data unit above said committed information rate, said queues (13a, 13b) are resized to enlarge said second queue (13b) by at least the length of said new data unit as long as said buffer memory (13) is not full.

4. A method according to claim 2, wherein in case the buffer memory (13) is full and upon receipt of a new data unit below said committed information rate; one or more data units are discarded from said second queue (13b) and said queues (13a, 13b) are resized to enlarge said first queue (13a) by at least the length of said new data unit.

5. A method according to claim 2, wherein assignment of memory space to said queues (13a, 13b) is managed through the use of a linked list of buffer locations.

6. A method according to claim 1, wherein said step of policing comprises classify said data units into data units below a committed information rate, data units above said committed information rate but below an excess information rate, and data units above said excess information rate; and discarding data packets above said excess information rate.

7. A traffic manager (10) for buffering a burst mode data signal comprising formatted data units, the traffic manager (10) comprising:
- a policer (11) for classifying said data units into data units below a committed information rate and data units above said committed information rate;
- a buffer memory (13) for storing said policed data units; and
- a buffer control (15) adapted to monitor the filling level of said buffer memory (13) and upon the buffer memory (13) approaching to become full and one or more new data units below said committed information rate are received, to discard data units above said committed information rate from said buffer memory (13) and to store said new data units below said committed information rate into said buffer memory (13); wherein said buffer control (15) is adapted to structure said buffer memory (13) into at least two queues (13a, 13b), comprising a first queue (13a) for data units below said committed information rate and a second queue (13b) for data units above said committed information rate;
**characterized by**
- a write control (12) adapted to add ascending sequence numbers to said data units and to write said numbered data units into said buffer memory (13) and
- a read control (14) adapted to read said numbered data units from said buffer memory (13) in the order of said ascending sequence numbers.

8. A traffic manager according to claim 7, wherein said buffer control (15) is adapted to adjust the size of said queues (13a, 13b) dynamically in dependence of the amount of data units received.

9. A traffic manager according to claim 8, wherein said buffer control (15) is adapted to assign empty memory space by default to said first queue (13a) and to resize said queues (13a, 13b) upon receipt of a new data unit above said committed information rate to enlarge said second queue (13b) by the length of said new data unit as long as said buffer memory (13) is not full.

10. A traffic manager according to claim 9, wherein said buffer control (15) is adapted to discard from said second queue (13b) one or more data units in case the buffer memory (13) is full and upon receipt of a new data unit below said committed information rate and to resize said queues (13a, 13b) to enlarge said first queue (13a) by at least the length of said new data unit.

## Patentansprüche

1. Verfahren zur Pufferung eines Datensignals im Burst-Modus mit formatierten Dateneinheiten, wobei das Verfahren umfasst:
- Kontrollieren eines Datenstroms, um die besagten Dateneinheiten in Dateneinheiten unter einer garantierten Informationsrate und Dateneinheiten über einer garantierten Informationsrate zu klassifizieren;
- Speichern der besagten überwachten Dateneinheiten in einem Pufferspeicher (13);
- wenn sich ein Pufferspeicher (13) dem maximalen Füllstand nähert und eine oder mehrere neue Dateneinheiten unter der besagten garantierten Informationsrate empfangen werden, Entfernen der Dateneinheiten über der besagten garantierten Informationsrate aus dem besagten Pufferspeicher (13), und Speichern der besagten neuen Dateneinheiten unter der besagten garantierten Informationsrate in dem besagten Pufferspeicher (13);
wobei der besagte Pufferspeicher (13) in mindestens zwei Warteschlangen (13a, 13b) strukturiert ist, und wobei Dateneinheiten unter der besagten garantierten Informationsrate in einer ersten der besagten Warteschlangen (13a) und Dateneinheiten über der besagten garantierten Informationsrate in einer zweiten der besagten Warteschlangen (13b) gespeichert werden;
**dadurch gekennzeichnet, dass**
die besagten Dateneinheiten vor deren Speicherung in dem besagten Pufferspeicher (13) mit absteigenden Sequenznummer nummeriert werden; und dass die besagten Dateneinheiten in der Reihenfolge, in welcher sie auf der Basis der besagten absteigenden Sequenznummern gespeichert wurden, aus dem Pufferspeicher (13) ausgelesen werden.

2. Verfahren nach Anspruch 1, wobei die Größe der besagten Warteschlangen (13a, 13b) in Abhängigkeit von der Menge der empfangenen Dateneinheiten dynamisch angepasst wird.

3. Verfahren nach Anspruch 2, wobei leerer Speicherplatz in der Voreinstellung der besagten ersten Warteschlange (13a) zugewiesen wird, und wobei die Größe der besagten Warteschlangen (13a, 13b) bei Empfang einer neuen Dateneinheit über der besagten garantierten Informationsrate angepasst wird, um die besagte zweite Warteschlange (13b) um mindestens die Länge der besagten neuen Dateneinheit zu vergrößern, solange der besagte Pufferspeicher (13) nicht voll ist.

4. Verfahren nach Anspruch 2, wobei, wenn der Pufferspeicher (13) voll ist und eine neue Dateneinheit unter der besagten garantierten Informationsrate empfangen wird, eine oder mehrere Dateneinheiten aus der besagten zweiten Warteschlange (13b) entfernt werden und die Größe der besagten Warteschlangen (13a, 13b) angepasst wird, um die besagte erste Warteschlange (13a) um mindestens die Länge der besagten neuen Dateneinheit zu vergrößern.

5. Verfahren nach Anspruch 2, wobei das Zuweisen von Speicherplatz an die besagten Warteschlangen (13a, 13b) unter Verwendung einer verknüpften Liste von Pufferspeicherplätzen verwaltet wird.

6. Verfahren nach Anspruch 1, wobei der besagte Schritt des Kontrollierens das Klassifizieren der besagten Dateneinheiten in Dateneinheiten unter einer garantierten Informationsrate, Dateneinheiten über der besagten garantierten Informationsrate, jedoch unter einer überschüssigen Informationsrate, und Dateneinheiten über der besagten überschüssigen Informationsrate; sowie das Entfernen von Datenpaketen über der besagten überschüssigen Informationsrate umfasst.

7. Verkehrsverwalter (10) zur Pufferung eines Datensignals im Burst-Modus mit formatierten Dateneinheiten, wobei der Verkehrsverwalter (10) umfasst:
- Einen Policer (11) zum Klassifizieren der besagten Dateneinheiten in Dateneinheiten unter einer garantierten Informationsrate und Dateneinheiten über der besagten garantierten Informationsrate;
- einen Pufferspeicher (13) zum Speichern der besagten kontrollierten Dateneinheiten;
und
- eine Puffersteuervorrichtung (15), welche dazu ausgelegt ist, den Füllstand des besagten Pufferspeichers (13) zu überwachen und, wenn sich der Pufferspeicher (13) dem maximalen Füllstand nähert und eine oder mehrere Dateneinheiten unter der besagten garantierten Informationsrate empfangen werden, Dateneinheiten über der besagten garantierten Informationsrate aus dem besagten Pufferspeicher (13) zu entfernen und die besagten neuen Dateneinheiten unter der besagten garantierten Informationsrate in dem besagten Pufferspeicher (13) zu speichern; wobei die besagte Puffersteuervorrichtung (15) dazu ausgelegt ist, den besagten Pufferspeicher (13) in mindestens zwei Warteschlangen (13a, 13b), umfassend eine erste Warteschlange (13a) für Dateneinheiten unter der besagten garantierten Informationsrate und eine zweite Warteschlange (13b) für Dateneinheiten über der besagten garantierten Informationsrate, zu strukturieren;
**gekennzeichnet durch**
- eine Lesesteuerung (12), dazu ausgelegt, aufsteigende Sequenznummern zu den besagten Dateneinheiten hinzuzufügen und die besagten nummerierten Dateneinheiten in den besagten Pufferspeicher (13) einzuschreiben, und
- eine Schreibsteuerung (14), dazu ausgelegt, die besagten nummerierten Dateneinheiten in der Reihenfolge der besagten aufsteigenden Sequenznummern aus dem besagten Pufferspeicher (13) auszulesen.

8. Verkehrsverwalter nach Anspruch 7, wobei die besagte Puffersteuervorrichtung (15) dazu ausgelegt ist, die Größe der besagten Warteschlangen (13a, 13b) in Abhängigkeit von der Menge der empfangenen Dateneinheiten dynamisch anzupassen.

9. Verkehrsverwalter nach Anspruch 8, wobei die besagte Puffersteuervorrichtung (15) dazu ausgelegt ist, einen leeren Speicherplatz in der Voreinstellung der besagten ersten Warteschlange (13a) zuzuweisen und die Größe der besagten Warteschlangen (13a, 13b) bei Empfang einer neuen Dateneinheit über der besagten garantierten Informationsrate anzupassen, um die besagte zweite Warteschlange (13b) um die Länge der besagten neuen Dateneinheit zu vergrößern, solange der besagte Pufferspeicher (13) nicht voll ist.

10. Verkehrsverwalter nach Anspruch 9, wobei die besagte Puffersteuereinheit (15) dazu ausgelegt ist, eine oder mehrere Dateneinheiten aus der besagten zweiten Warteschlange (13b) zu entfernen, wenn der Pufferspeicher (13) voll ist und eine neue Dateneinheit unter der besagten garantierten Informationsrate empfangen wird, und die Größe der besagten Warteschlangen (13a, 13b) anzupassen, um die besagte erste Warteschlange (13a) um mindestens die Länge der besagten neuen Dateneinheit zu vergrößern.

## Revendications

1. Procédé de mise en mémoire tampon d'un signal de données en mode rafale comprenant des unités de données formatées, le procédé comprenant les étapes suivantes :
- réguler un flux de données pour classer lesdites unités de données en unités de données en dessous d'un débit d'informations garanti et en unités de données au-dessus dudit débit d'informations garanti ;
- stocker lesdites unités de données régulées dans une mémoire tampon (13) ;
- lorsque la mémoire tampon (13) est sur le point d'être pleine et lorsqu'une ou plusieurs nouvelles unités de données en dessous dudit débit d'informations garanti sont reçues ; éliminer les unités de données au-dessus dudit débit d'informations garanti de ladite mémoire tampon (13) et stocker lesdites nouvelles unités de données en dessous dudit débit d'informations garanti dans ladite mémoire tampon (13) ;
dans lequel ladite mémoire tampon (13) est structurée en au moins deux files d'attente (13a, 13b), et dans lequel les unités de données en dessous dudit débit d'informations garanti sont stockées dans une première file d'attente parmi lesdites files d'attente (13a) et les unités de données au-dessus dudit débit d'informations garanti sont stockées dans une deuxième file d'attente parmi lesdites files d'attente (13b) ;
**caractérisé en ce que**
lesdites unités de données sont numérotées avec des numéros de séquence croissants avant de les stocker dans ladite mémoire tampon (13) ; et **en ce que** lesdites unités de données numérotées sont lues à partir de la mémoire tampon (13) dans l'ordre dans lequel elles ont été stockées en se basant sur lesdits numéros de séquence croissants.

2. Procédé selon la revendication 1, dans lequel la taille desdites files d'attente (13a, 13b) est ajustée dynamiquement en fonction de la quantité d'unités de données reçues.

3. Procédé selon la revendication 2, dans lequel un espace mémoire vide est attribué par défaut à ladite première file d'attente (13a) et dans lequel lors de la réception d'une nouvelle unité de données au-dessus dudit débit d'informations garanti, lesdites files d'attente (13a, 13b) sont redimensionnées pour agrandir ladite deuxième file d'attente (13b) d'au moins la longueur de ladite nouvelle unité de données tant que ladite mémoire tampon (13) n'est pas pleine.

4. Procédé selon la revendication 2, dans lequel dans le cas où la mémoire tampon (13) est pleine et lors de la réception d'une nouvelle unité de données en dessous dudit débit d'informations garanti ; une ou plusieurs unités de données sont éliminées de ladite deuxième file d'attente (13b) et lesdites files d'attente (13a, 13b) sont redimensionnées pour agrandir ladite première file d'attente (13a) d'au moins la longueur de ladite nouvelle unité de données.

5. Procédé selon la revendication 2, dans lequel l'attribution d'un espace mémoire auxdites files d'attente (13a, 13b) est gérée par l'utilisation d'une liste liée d'emplacements de mémoire tampon.

6. Procédé selon la revendication 1, dans lequel ladite étape de régulation comprend le classement desdites unités de données en unités de données en dessous d'un débit d'informations garanti, en unités de données au-dessus dudit débit d'informations garanti mais en dessous d'un débit d'informations en excès, et en unités de données au-dessus dudit débit d'informations en excès ; et l'élimination des paquets de données au-dessus dudit débit d'informations en excès.

7. Gestionnaire de trafic (10) pour mettre en mémoire tampon un signal de données en mode rafale comprenant des unités de données formatées, le gestionnaire de trafic (10) comprenant :
- un régulateur (11) pour classer lesdites unités de données en unités de données en dessous d'un débit d'informations garanti et en unités de données au-dessus dudit débit d'informations garanti ;
- une mémoire tampon (13) pour stocker lesdites unités de données régulées ; et
- une commande de mémoire tampon (15) adaptée pour surveiller le niveau de remplissage de ladite mémoire tampon (13) et, lorsque la mémoire tampon (13) est sur le point d'être pleine et lorsqu'une ou plusieurs nouvelles unités de données en dessous dudit débit d'informations garanti sont reçues, pour éliminer les unités de données au-dessus dudit débit d'informations garanti de ladite mémoire tampon (13) et pour stocker lesdites nouvelles unités de données en dessous dudit débit d'informations garanti dans ladite mémoire tampon (13) ; dans lequel ladite commande de mémoire tampon (15) est adaptée pour structurer ladite mémoire tampon (13) en au moins deux files d'attente (13a, 13b), comprenant une première file d'attente (13a) pour les unités de données en dessous dudit débit d'informations garanti et une deuxième file d'attente (13b) pour les unités de données au-dessus dudit débit d'informations garanti ;
**caractérisé par**
- une commande d'écriture (12) adaptée pour ajouter des numéros de séquence croissants auxdites unités de données et pour écrire lesdites unités de données numérotées dans ladite mémoire tampon (13) et
- une commande de lecture (14) adaptée pour lire lesdites unités de données numérotées à partir de ladite mémoire tampon (13) dans l'ordre desdits numéros de séquence croissants.

8. Gestionnaire de trafic selon la revendication 7, dans lequel ladite commande de mémoire tampon (15) est adaptée pour ajuster dynamiquement la taille desdites files d'attente (13a, 13b) en fonction de la quantité d'unités de données reçues.

9. Gestionnaire de trafic selon la revendication 8, dans lequel ladite commande de mémoire tampon (15) est adaptée pour attribuer un espace mémoire vide par défaut à ladite première file d'attente (13a) et pour redimensionner lesdites files d'attente (13a, 13b) lors de la réception d'une nouvelle unité de données au-dessus dudit débit d'informations garanti pour agrandir ladite deuxième file d'attente (13b) de la longueur de ladite nouvelle unité de données tant que ladite mémoire tampon (13) n'est pas pleine.

10. Gestionnaire de trafic selon la revendication 9, dans lequel ladite commande de mémoire tampon (15) est adaptée pour éliminer de ladite deuxième file d'attente (13b) une ou plusieurs unités de données dans le cas où la mémoire tampon (13) est pleine et lors de la réception d'une nouvelle unité de données en dessous dudit débit d'informations garanti et pour redimensionner lesdites files d'attente (13a, 13b) pour agrandir ladite première file d'attente (13a) d'au moins la longueur de ladite nouvelle unité de données.
